# EUROPÄISCHE PATENTANMELDUNG

(11) **EP 3 103 987 A1**
(43) Veröffentlichungstag der Anmeldung: **14.12.2016**
(21) Anmeldenummer: 15171373.2
(22) Anmeldetag: 10.06.2015
(51) Int. Cl.: F02C 7/057, F02C 9/20, F02C 9/28, F02C 9/54, F01D 17/08

(54) **AUSTRITTSTEMPERATURABHÄNGIGE REGELUNG DES MASSENSTROMS EINER TURBINENKOMPONENTE**

(71) Anmelder: Siemens Aktiengesellschaft, 80333 München (DE)
(72) Erfinder: Ackenhausen, Harald, 46537 Dinslaken (DE); Beiler, Jan-Dirk, 45473 Mülheim a.d. Ruhr (DE); Beutin, Matthias, 46446 Emmerich (DE); Gorynski, Markus, 44879 Bochum (DE); Karaöz, Tuncay, 45889 Gelsenkirchen (DE); Kull, Ralf, 40885 Ratingen (DE); Sternemann, Ansgar, 44623 Herne (DE)

(57) **Zusammenfassung**

Es wird ein Verfahren und eine Vorrichtung zur Regelung eines Massenstromes in einer Turbine (100), beispielsweise einer Gasturbine, beschrieben. Die Turbine umfasst eine zum Führen eines Massenstromes ausgelegte Komponente (105) mit einem Austritt. Das Verfahren umfasst die folgenden Schritte:
- Messen der Temperatur eines Massenstromes am Austritt der Komponente (105), und
- Regeln des Massenstromes in der Komponente (105) basierend auf der am Austritt gemessenen Temperatur.

## Beschreibung

### Gegenstand der Erfindung

Die vorliegende Erfindung betrifft ein Verfahren und eine Vorrichtung zur Regelung eines Massenstromes in einer Turbine, insbesondere einer Gasturbine. Darüber hinaus betrifft die Erfindung eine Gasturbine.

### Hintergrund der Erfindung

Die Leistung von modernen Gasturbinen wird bei konstanter Abgastemperatur durch die Verstellung der ersten Verdichter-Leitschaufelreihe(n) (VGVs) geregelt. Werden die VGVs aufgedreht, steigen der Verdichter-Volumenstrom/Massenstrom und damit die Leistung der Gasturbine. Gleichzeitig steigen das Druckverhältnis des Verdichters und die Temperatur am Verdichterende bzw. am Verdichteraustritt. Der Bereich hinter dem Verdichter muss für die maximale Temperatur am Verdichterende ausgelegt sein. So ist zum Beispiel die Anwendungstemperatur sowie das tolerierbare temperaturbedingte Kriechen des Rotors (bzw. der mittleren Hohlwelle) limitiert, damit die Gasturbine nicht beschädigt wird.

Wird der Verdichter-Volumenstrom/Massestrom bzw. das Verdichter-Druckverhältnis weiter gesteigert, zum Beispiel durch Upgrades wie CMF+ (T4 Verdichter) oder CMF++ (T5 Verdichter), steigt auch die maximale Temperatur am Verdichterende weiter an. Um bei jeder Umgebungstemperatur sicheren Betrieb zu gewährleisten, kann ein kostenintensiver Austausch von Gasturbinenbauteilen (z. B. Mittlere Hohlwelle gegen Torque Disks) erforderlich sein, um Gasturbinenschäden vorzubeugen.

Die Gasturbinenbauteile hinter dem Verdichter werden bislang gemäß den maximal erreichbaren Temperaturen am Verdichterende ausgelegt bzw. konfiguriert. So ist bei Upgrades häufig ein Austausch der Rotorteile in der Mittensektion erforderlich.

### Beschreibung der Erfindung

Vor diesem Hintergrund ist es eine erste Aufgabe der vorliegenden Erfindung, ein vorteilhaftes Verfahren zur Regelung eines Massenstromes in einer Turbine zur Verfügung zu stellen. Eine zweite Aufgabe besteht darin, eine vorteilhafte Vorrichtung zur Regelung eines Massenstromes in einer Turbine zur Verfügung zu stellen. Eine dritte Aufgabe besteht darin, eine vorteilhafte Gasturbine zur Verfügung zu stellen. Die erste Aufgabe wird durch ein Verfahren zur Regelung eines Massenstromes in einer Turbine gemäß Patentanspruch 1 gelöst. Die zweite Aufgabe wird durch eine Vorrichtung zur Regelung eines Massenstromes in einer Turbine nach Patentanspruch 11 gelöst. Die dritte Aufgabe wird durch eine Gasturbine nach Patentanspruch 12 gelöst. Die abhängigen Ansprüche enthalten weitere, vorteilhafte Ausgestaltungen der Erfindung.

Das erfindungsgemäße Verfahren zur Regelung eines Massenstromes in einer Turbine bezieht sich auf eine Turbine, welche eine zum Führen eines Massenstromes ausgelegte Komponente mit einem Austritt bzw. einem Austrittsende umfasst. Das Verfahren umfasst die folgenden Schritte: Die Temperatur eines die Komponente am Austritt der Komponente verlassenden Massenstroms wird gemessen und der Massenstrom in der Komponente wird basierend auf der am Austritt gemessenen Temperatur geregelt. Das beschriebene Verfahren ermöglicht ein effizientes Betreiben einer Turbine, da es verhindert, dass Turbinenbauteile Temperaturen ausgesetzt werden, welche die maximal zulässigen Werte überschreiten.

Vorzugsweise wird mit Hilfe des Verfahrens ein Massenstrom in einer Gasturbine geregelt. Die Turbine kann beispielsweise eine Ringbrennkammer umfassen.

Vorzugsweise wird die Temperatur mittels eines Temperatursensors, also direkt, gemessen. Weiterhin kann der Massenstrom in der Komponente abgesenkt bzw. verringert werden, falls die gemessen Temperatur höher ist als ein erster Schwellenwert. Zusätzlich oder alternativ dazu kann der Massenstrom in der Komponente angehoben bzw. erhöht werden, falls die gemessene Temperatur niedriger bzw. geringer ist als ein zweiter Schwellenwert.

Der erste Schwellenwert und/oder der zweite Schwellenwert können im Rahmen des erfindungsgemäßen Verfahrens festgesetzt werden. Vorteilhafterweise umfasst die Turbine einen Verdichter mit einem Verdichteraustritt. Beispielsweise können der erste Schwellenwert und/oder der zweite Schwellenwert in Abhängigkeit von der Temperatur in der Umgebung des Verdichteraustritts festgesetzt werden. Dazu kann die Temperatur in der Umgebung des Verdichteraustritts gemessen werden. Dies kann mit Hilfe eines Temperatursensors erfolgen, welcher vorzugsweise so angeordnet ist, dass die Temperatur des Fluids am Verdichteraustritt oder die Temperatur des Materials der Komponente, die den Verdichteraustritt bildet, gemessen wird.

Vorzugsweise wird die Temperatur des Massenstroms am Verdichteraustritt (Verdichteraustrittstemperatur) gemessen. Der Verdichter umfasst bevorzugt eine Anzahl Verdichter-Leitschaufelreihen. In diesem Fall wird im Rahmen der Regelung der Massenstrom im Verdichter verändert oder angepasst, indem die Position, beispielsweise der Anstellwinkel, der Leitschaufeln mindestens einer der in Strömungsrichtung der Leitschaufelreihen verstellt bzw. eingestellt wird.

Vorzugsweise wird die Leitschaufelposition schrittweise verstellt bzw. verändert. Dazu kann beispielsweise der Anstellwinkel der einzelnen Leitschaufeln schrittweise reduziert werden, bis der erste Schwellenwert erreicht ist, falls die Verdichteraustrittstemperatur über dem ersten Schwellenwert liegt. Alternativ dazu kann der Anstellwinkel der einzelnen Leitschaufeln schrittweise erhöht werden bis der zweite Schwellenwert erreicht ist, falls die Verdichteraustrittstemperatur unter dem zweiten Schwellenwert liegt. Auf diese Weise wird effizient verhindert, dass die zulässige Temperatur, für die der Verdichter ausgelegt ist, am Verdichterende überschritten wird. Gleichzeitig wird die Effizienz der Turbine optimiert, indem der Massenstrom durch den Verdichter, bei einer geringeren als der zulässigen Temperatur am Verdichteraustrittsende, erhöht wird.

In einer weiteren Variante umfasst die Turbine eine Brennkammer und einen Turbinenaustritt und die Temperatur des Massenstromes am Turbinenaustritt wird gemessen. In diesem Fall kann im Rahmen der Regelung der Massenstrom in der Turbine verändert oder angepasst werden, indem der Brennstoffmassenstrom geregelt oder verändert wird. Dabei wird der Brennstoffmassenstrom in Abhängigkeit von der Temperatur des Massenstroms am Turbinenaustritt geregelt. Dabei kann der Brennstoffmassenstrom dadurch geregelt werden, dass die Eintrittsleitschaufeln geschlossen werden.

Wie in der oben beschriebenen Variante kann die Turbine einen Verdichter mit einer Anzahl Verdichter-Leitschaufelreihen umfassen. Im Rahmen der Regelung kann der Massenstrom in der Turbine in Abhängigkeit von der Turbinenausstrittstemperatur verändert oder angepasst werden, indem die Position, beispielsweise der Anstellwinkel, der Leitschaufeln des Verdichters mindestens einer der in Strömungsrichtung ersten Leitschaufelreihen verstellt bzw. eingestellt wird. Vorzugsweise wird die Leitschaufelposition schrittweise verstellt bzw. verändert. Beispielsweise kann der Anstellwinkel schrittweise reduziert werden, bis der erste Schwellenwert erreicht ist, falls die Turbinenausstrittstemperatur über dem ersten Schwellenwert liegt. Alternativ dazu kann der Anstellwinkel schrittweise erhöht werden, bis der zweite Schwellenwert erreicht ist, falls die Turbinenausstrittstemperatur unter dem zweiten Schwellenwert liegt.

Die erfindungsgemäße Vorrichtung zur Regelung eines Massenstroms in einer Turbine, welche eine zum Führen des Massenstromes ausgelegte Komponente mit einem Austritt umfasst, zeichnet sich dadurch aus, dass die Vorrichtung mindestens eine Einrichtung zum Messen der Temperatur eines die Komponente am Austritt der Komponente verlassenden Massenstroms umfasst. Die Vorrichtung umfasst zudem eine Einrichtung zur Regelung des Massenstromes in der Komponente basierend auf bzw. in Abhängigkeit von der am Austritt gemessenen Temperatur. Die Einrichtung zum Messen der Temperatur umfasst vorteilhafterweise einen Temperatursensor oder ist als Temperatursensor ausgebildet.

Die beschriebene Vorrichtung eignet sich insbesondere zur Durchführung des zuvor beschriebenen erfindungsgemäßen Verfahrens. Die Vorrichtung ist zudem geeignet, um bestehende Turbinen nachzurüsten. Dadurch kann die Effizienz der bestehenden Turbinen gesteigert und gleichzeitig deren Betriebsdauer verlängert werden, da Überschreitungen der zulässigen Höchsttemperatur einzelner Komponenten vermieden wird.

Die erfindungsgemäße Gasturbine umfasst eine zuvor beschriebene Vorrichtung. Sie hat grundsätzlich dieselben Vorteile wie die zuvor beschriebene erfindungsgemäße Vorrichtung. Die Gasturbine umfasst vorzugsweise einen Verdichter mit einem Verdichteraustritt und/oder eine Turbine mit einem Turbinenaustritt. Die Einrichtung zum Messen der Temperatur ist bevorzugt am Verdichteraustritt und/oder am Turbinenaustritt angeordnet. Dabei wird unter einer Anordnung am Austritt auch eine Anordnung in der unmittelbaren Umgebung des jeweiligen Austritts verstanden, die es ermöglicht bzw. dazu ausgelegt ist, die Temperatur des den Verdichter bzw. die Turbine verlassenden Massenstroms zu messen.

Insbesondere können der Verdichteraustritt und/oder der Turbinenaustritt eine Mittelachse umfassen. Die Einrichtung zur Messung der Temperatur kann vorzugsweise an der Mittelachse an oder in einer dem Austritt gegenüber liegenden Wand der Gasturbine angeordnet sein.

Weiterhin kann die Turbine einen Verdichter mit Verdichterleitschaufeln umfassen. Dabei kann die Einrichtung zur Regelung des Massenstromes ausgelegt sein zur Einstellung bzw. zur Verstellung der Position der Verdichterleitschaufeln in Abhängigkeit von der gemessenen Verdichteraustrittstemperatur und/oder Turbinenaustrittstemperatur.

Die erfindungsgemäße Gasturbine hat den Vorteil, dass sie aufgrund der Vorrichtung zur Regelung des Massenstromes so betrieben werden kann, dass ein Überschreiten der zulässigen Höchsttemperatur für die jeweiligen Komponenten vermieden wird. Dies vermeidet einen Kostenintensiven Austausch von Turbinenbauteilen und beugt Turbinenschäden vor. Insbesondere kann in diesem Zusammenhang die jeweilige Umgebungstemperatur der Turbine individuell berücksichtigt werden.

Weiterhin kann die erfindungsgemäße Gasturbine im Hinblick auf ihre Leistung effizient betrieben werden, da ein deutliches Unterscheiten der zulässigen Temperatur, für die die jeweilige Komponente ausgelegt ist, vermieden wird. Der jeweilige Massenstrom kann in diesem Fall automatisch erhöht werden. Dies kann ebenfalls unter Berücksichtigung der jeweiligen Umgebungstemperatur individuell erfolgen.

Insgesamt ermöglicht die vorliegende Erfindung eine Turbinenregelung, insbesondere eine Gasturbinenregelung, basierend auf der direkten Messung der Verdichteraustritttemperatur bzw. Turbinenausstrittstemperatur, wobei die Verdichteraustrittstemperaturen durch eine Massenstromabsenkung bei hohen Umgebungstemperaturen verringert werden.

Die Erfindung beruht auf der Idee, dass die Temperatur am Verdichterende (TVII) über eine Regelung eine maximale konfigurationsabhangige Temperatur nicht überschreitet. Dies erfolgt durch direkte Messung der Verdichteraustrittstemperatur. Bei Überschreiten der Temperatur aufgrund hoher Umgebungstemperaturen wird die maximal zulässige Leitschaufelposition solange schrittweise reduziert, bis die TVII wieder im zulässigen Bereich ist. Bei Abkühlen und Unterschreiten der Maximaltemperatur abzüglich eines Totbandes, wird die maximale Verdichterleitschaufelposition schrittweise angehoben.

Für Anlagen, die in einem weiten Umgebungstemperaturbereich betrieben werden, hohe Temperaturen jedoch sehr selten sind, können auf diese Weise bei geringem Leistungsverlust an heißen Tagen Hardwarekosten eingespart werden. Die erforderliche Hardware kann so anforderungsspezifisch nach dem kommerziell sinnvollsten Konzept zusammengestellt werden. Weitere Einflüsse wie Luftfeuchte, Verdichteralterung etc., sowie die Verwendung von Maßnahmen, die die Verdichteraustrittstemperaturen absenken (WetC, EVAP cooler etc.), werden durch die Regelung über die direkte Messung der Verdichteraustrittstemperatur erfasst und erfordern keine Absicherung durch zusätzliche Sicherheitsmargen bzw. aufwändige Bewertungen.

### Beschreibung von Ausführungsbeispielen

Weitere Merkmale, Eigenschaften und Vorteile der vorliegenden Erfindung werden im Folgenden anhand von Ausführungsbeispielen unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsbeispiele stellen lediglich Beispiele dar, welche den Gegenstand der Erfindung jedoch nicht beschränken.
- Fig. 1: zeigt ein Flussdiagram einer ersten Variante des erfindungsgemäßen Verfahrens.
- Fig. 2: zeigt ein Flussdiagram einer zweiten Variante des erfindungsgemäßen Verfahrens.
- Fig. 3: zeigt schematisch ein Beispiel für die Regelung des Massenstroms im Verdichter einer Gasturbine in Form eines Diagramms.
- Fig. 4: zeigt beispielhaft eine Gasturbine in einem Längsteilschnitt.
- Fig. 5: zeigt schematisch einen Ausschnitt einer Gasturbine in einer geschnittenen und teilweise perspektivischen Ansicht.
- Fig. 6: zeigt eine Draufsicht auf die Gasturbine in Richtung der Längsachse.
- Fig. 7: zeigt schematisch ein Beispiel für die Regelung des Massenstroms in der Turbine einer Gasturbine in Form eines Diagramms.

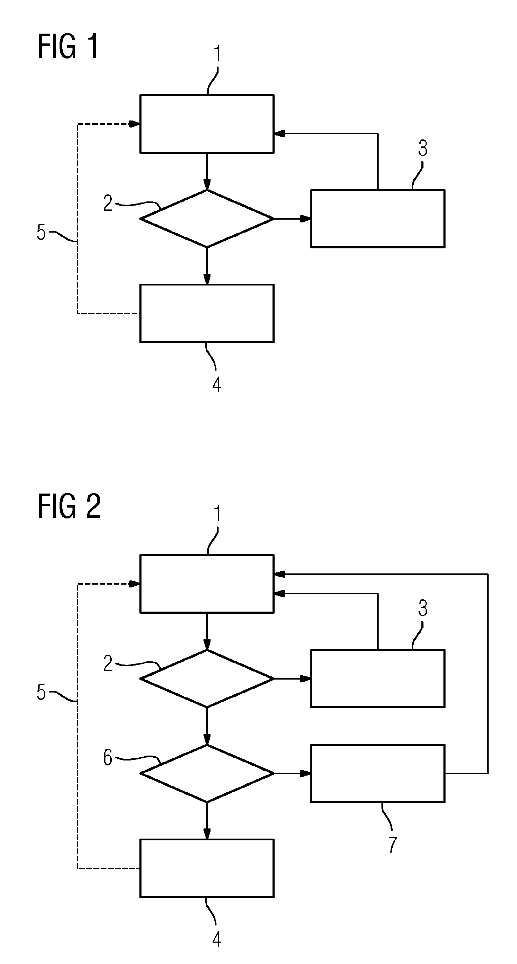

Das erfindungsgemäße Verfahren wird zunächst anhand der Figuren 1 und 2 näher erläutert. Die Figur 1 zeigt ein Flussdiagram einer ersten Variante des erfindungsgemäßen Verfahrens.

Bei Schritt 1 wird die Austrittstemperatur der Komponente, beispielsweise die Verdichteraustrittstemperatur, gemessen. Dies kann mit Hilfe eines an dem jeweiligen Austritt bzw. in unmittelbarer Umgebung des Austritts angeordneten Temperatursensors erfolgen. In Schritt 2 wird überprüft, ob die gemessene Austrittstemperatur höher ist, als ein festgelegter erster Schwellenwert. Falls ja, wird der Massenstrom in der jeweiligen Komponente in Schritt 3 abgesenkt bzw. verringert. Dies kann dadurch erfolgen, dass die jeweiligen Eintrittsleitschaufeln verstellt werden, also ihre Position entsprechend angepasst wird. Insbesondere kann dazu die Position der Leitschaufeln mindestens einer der ersten Leitschaufelreihen des Verdichters entsprechend eingestellt werden. Anschließend geht das Verfahren wieder zu Schritt 1.

Ist bei Schritt 2 die Austritttemperatur nicht höher als der festgelegte erste Schwellenwert so endet das Verfahren bei Schritt 4. Vorzugsweise wird das Verfahren jedoch erneut mit Schritt 1 gestartet. Dies ist durch den als gestrichelte Linie gezeigten Pfeil 5 angedeutet.

Die Figur 2 zeigt das erfindungsgemäße Verfahren in Form eines Flussdiagramms in einer zweiten Variante. Die in der Figur 2 gezeigte Variante es Verfahrens unterscheidet sich von der in Figur 1 gezeigten und zuvor beschriebenen Variante dadurch, dass zusätzlich ein zweiter Schwellenwert berücksichtigt wird. Ist die gemessene Austrittstemperatur in Schritt 2 nicht höher als der festgelegte erste Schwellenwert, so überprüft das Verfahren in der vorliegenden Variante in Schritt 6, ob die gemessene Austrittstemperatur geringer ist, als ein festgelegter zweiter Schwellenwert. Falls dies nicht der Fall ist, so endet das Verfahren wiederum mit Schritt 4 oder wird, wie durch den gestrichelten Pfeil 5 angedeutet, erneut mit Schritt 1 fortgesetzt.

Falls in Schritt 6 die gemessene Austrittstemperatur geringer ist als der zweite festgelegte Schwellenwert, so wird in Schritt 7 der jeweilige Massenstrom in der Komponente erhöht. Dies erfolgt analog zu dem im Zusammenhang mit Schritt 3 beschriebenen Absenken bzw. Verringern des Massenstroms durch eine entsprechende Verstellung bzw. Einstellung der jeweiligen Leitschaufeln.

Grundsätzlich kann im Rahmen der Festlegung des ersten und/oder des zweiten Schwellenwertes die für die jeweilige Komponente zulässige Höchsttemperatur berücksichtigt werden. Weiterhin kann, falls möglich, bereits die aktuelle Umgebungstemperatur der Turbine bzw. der Komponente berücksichtigt werden.

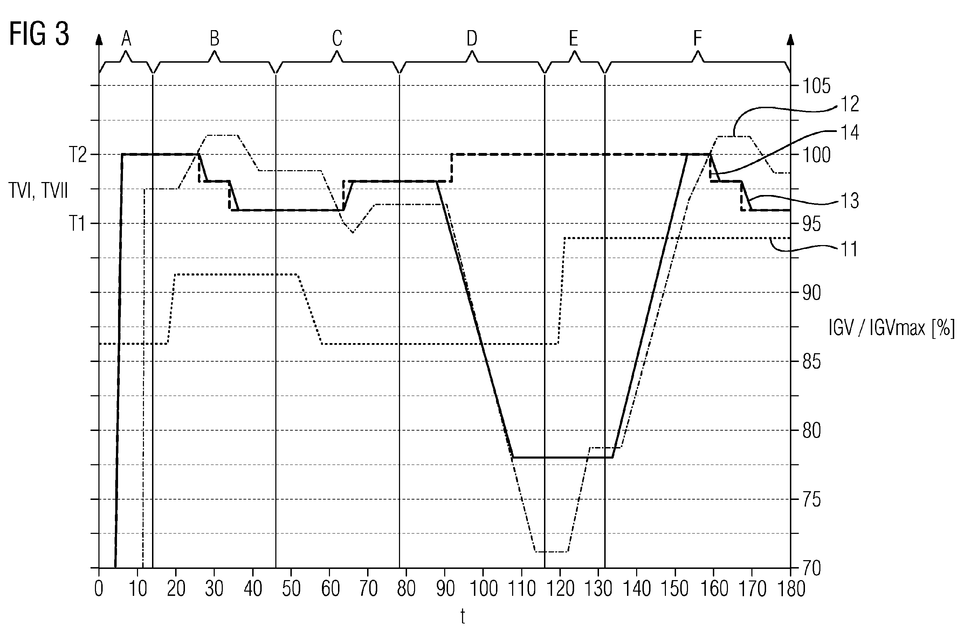

Die Figur 3 zeigt schematisch ein Beispiel für die Regelung des Massenstroms im Verdichter einer Gasturbine in Form eines Diagramms. Auf der x-Achse sind Zeitabschnitte angegeben. Auf der y-Achse auf der linken Seite des Diagramms sind die Verdichteraustrittstemperaturen von TVII angegeben. Zusätzlich ist der Bereich der TVI als Pfeil gekennzeichnet. Im vorliegenden Beispiel ist der erste Schwellenwert für die maximale Verdichteraustrittstemperatur auf T₁ festgesetzt. Der zweite Schwellenwert für die maximale Verdichteraustrittstemperatur ist auf T₂ festgesetzt.

Auf der rechten Seite des Diagramms ist auf der y-Achse die Einstellung der Eintrittsleitschaufeln in Prozent bezogen auf die Position bei maximaler Öffnung der Eintrittsleitschaufeln in Prozent angegeben.

Die Kurve 11 kennzeichnet TVI, die Kurve 12 kennzeichnet TVII, die Kurve 13 kennzeichnet die Position der Einlass-Leitschaufeln IGV und die Kurve 14 kennzeichnet IGVₘₐₓ.

Während des mit A gekennzeichneten Zeitabschnitts (Zeitschritt 0 bis 12) wird die Gasturbine gestartet. Dazu werden die Eintrittsleitschaufeln des Verdichters vollständig geöffnet (siehe Zeitabschnitt 4-5). Zeitlich verzögert bei Zeitschritt 12 steigt die Verdichteraustrittstemperatur TVII auf einen Wert zwischen T₁ und T₂ an.

In Zeitabschnitt B (von Zeitschritt 14 bis 46) wird TVI gesenkt. Dabei überschreitet bei Zeitschritt 26 die Verdichteraustrittstemperatur den ersten Schwellenwert. Daraufhin werden die Verdichtereintrittsleitschaufeln schrittweise verstellt auf 96% bei Zeitschritt 36. Bei Zeitschritt 40 ist die Verdichteraustrittstemperatur in Folge der Verstellung wieder auf einen Wert unterhalb des ersten Stellenwertes T₁ abgesunken.

In dem mit C gekennzeichneten Zeitraum (Zeitabschnitt 46 bis 78) wird TVI abgesenkt. Dem darauf resultierenden Absinken der Verdichteraustrittstemperatur wird durch eine Verstellung der Eintrittsleitschaufeln bei Zeitschritt 64 von 96% auf 98% begegnet, die Verdichteraustrittstemperatur sinkt somit nur kurzzeitig bei Zeitschritt 66 bis 68 unter den zweiten Schwellenwert T₂.

Bei dem mit D gekennzeichneten Zeitraum (Zeitschritt 78 bis 116) wird die Last der Turbine verringert. Die Verdichteraustrittsstemperatur sinkt auf einen Wert unterhalb von T₂ und die Position der Eintrittsleitschaufeln wird auf 78% eingestellt. In den folgenden Zeitraum E (Zeitabschnitt 16-32) wird während des Teillastbetriebes TVI erhöht. Dadurch steigt die Verdichteraustrittstemperatur. Die Einstellung der Eintrittsleitschaufeln bleibt konstant.

In dem Zeitraum F (Zeitabschnitt 132-180) wird die Last erhöht mit hohen TVI. Dazu werden die Verdichtereintrittsleitschaufeln auf 100% geöffnet. Die Verdichteraustrittstemperatur steigt an und überschreitet bei Zeitabschnitt 160 den ersten Schwellenwert T₁. Als Reaktion darauf wird die Position der Einlassleitschaufeln analog zu dem beim Zeitraum B beschriebenen Vorgehen angepasst. Dadurch wird eine zügige Absenkung der Verdichteraustrittstemperatur in den zusätzlichen Temperaturbereich bewirkt.

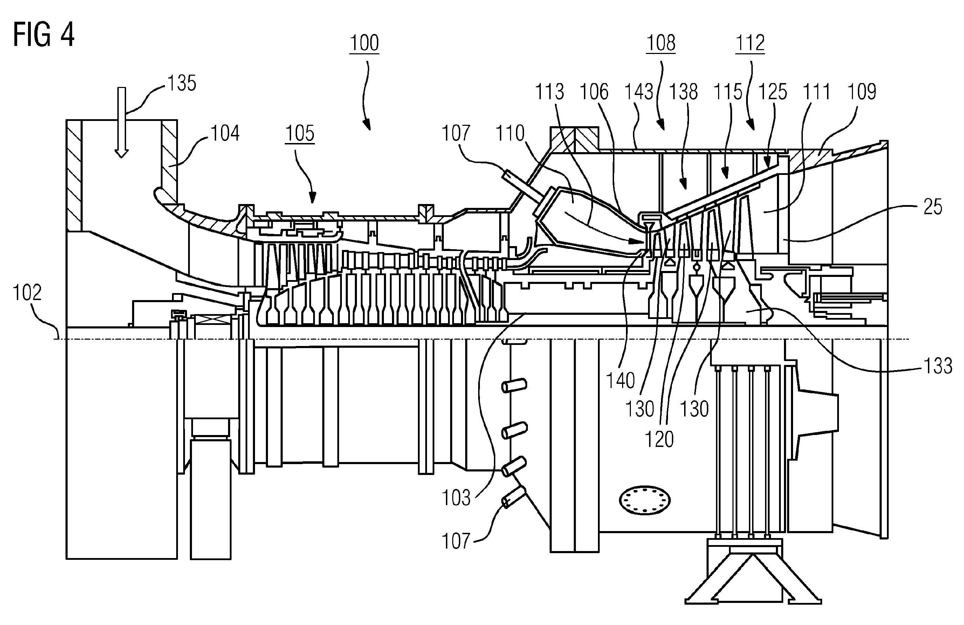

Die Figur 4 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt. Der Turbinenaustritt ist mit der Bezugsziffer 25 gekennzeichnet.

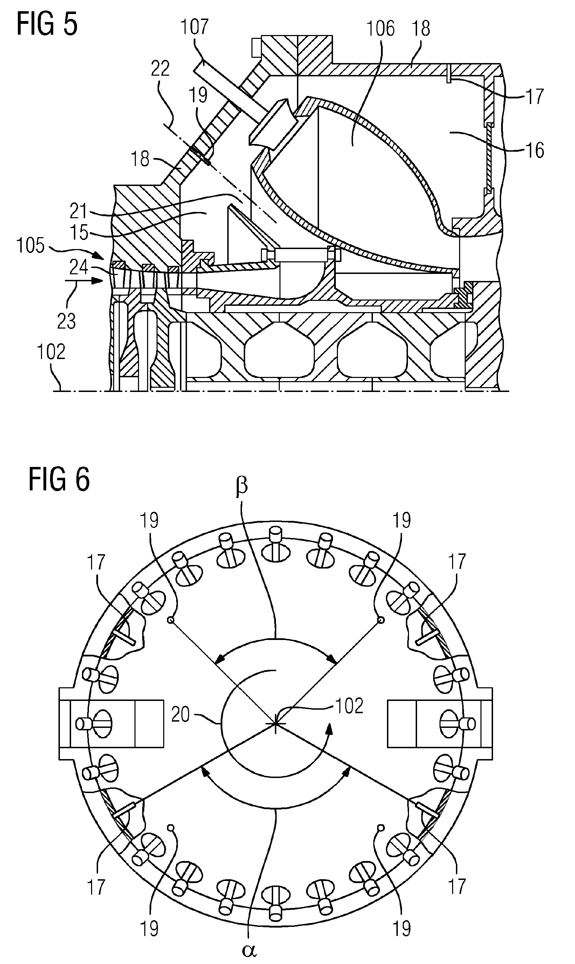

Die Figuren 5 und 6 zeigen schematisch mögliche Positionierungen der Temperatursensoren. Die Figur 5 zeigt schematisch einen Ausschnitt einer Gasturbine 100 in einer geschnittenen und teilweise perspektivischen Ansicht. Die Figur 6 zeigt eine Draufsicht auf die Gasturbine 100 in Richtung der Längs- oder Rotationsachse 102.

Die gezeigte Gasturbine 100 umfasst eine Ringbrennkammer 106. Dabei wird ein der Längsachse 102 zugewandter Innenraumbereich 15 und ein der Längsachse 102 abgewandter Innenraumbereich 16 gebildet. In bisherigen Ausführungen ist ein Temperatursensor 17 in einer Außenwand 18 der Gasturbine 100, die den der Längsachse 102 abgewandten Innenraumbereich 16 begrenzt angeordnet.

Zusätzlich oder alternativ dazu wird im Rahmen der vorliegenden Erfindung mindestens ein Temperatursensor 19 an oder in der Außenwand 18 des Statorgehäuses, welche den der Längsachse 102 zugewandten Innenraumbereich 15 begrenzt, angeordnet. Bevorzugt wird der Temperatursensor 19 gegenüber der Verdichteraustrittsöffnung 21, also am Verdichteraustritt, angeordnet. Dabei ist es vorteilhaft, wenn der Verdichteraustritt bzw. die Verdichteraustrittsöffnung 21 eine Mittelachse 22 umfasst und der Temperatursensor 19 an der der Verdichteraustrittsöffnung 21 gegenüberliegenden Wand 18 des Statorgehäuses an einer Position angeordnet wird, an welcher die Mittelachse 22 die Wand 18 schneidet. Diese Anordnung ermöglicht eine direkte Messung des aus dem Verdichteraustritt 21 austretenden Massenstromes. Die Strömungsrichtung im Verdichter 105 im Bereich der Schaufelreihen 24 ist durch einen Pfeil 23 gekennzeichnet.

In der Figur 6 ist die Anordnung der Temperatursensoren 17 und 19 in Umfangsrichtung 20 in Bezug auf die Längsachse 102 zueinander gezeigt. In bisherigen Lösungen wurden zwei, oder optional 4, Temperatursensoren 17 in Umfangsrichtung 20 zueinander so angeordnet, dass zwei benachbarte Temperatursensoren 17 einen Winkel α von 120° oder 60° einschließen. Die alternativ oder zusätzlich angeordneten erfindungsgemäßen Temperatursensoren 19 sind so angeordnet, dass zwei benachbarte Temperatursensoren 19 in Umfangsrichtung 20 einen Winkel β von 80°-100°, vorzugsweise 90° einschließen. Dazu werden in Umfangsrichtung 20 mindestens zwei Temperatursensoren 19, vorzugsweise vier Temperatursensoren 19, entsprechend angeordnet.

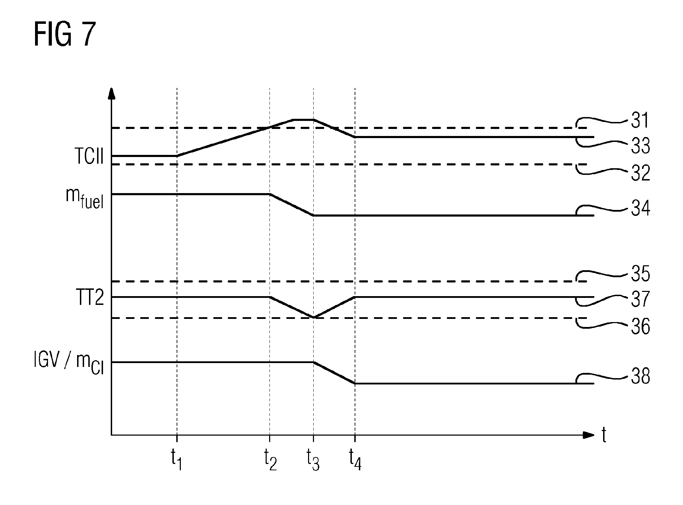

Im Folgenden wird ein Beispiel für die Regelung des Massenstroms in der Turbine 112 anhand der Figur 7 erläutert. Die Figur 7 zeigt schematisch ein Beispiel für die Regelung des Massenstroms in der Turbine einer Gasturbine in Form eines Diagramms.

Auf der x-Achse ist die Zeit t schematisch aufgetragen. Auf der y-Achse sind die Kompressoraustrittstemperatur TCII, der Brennstoffmassenstrom m_{fuel}, die Turbinenautrittstemperatur TT2 und die IGV Position bzw. der Kompressormassenstrom m_{CI} jeweils schematisch aufgetragen. Der zeitliche Verlauf der Kompressoraustrittstemperatur TCII ist als Kurve 33 abgebildet. Der zeitliche Verlauf des Brennstoffmassenstroms m_{fuel} ist als Kurve 34 abgebildet. Der zeitliche Verlauf der Turbinenautrittstemperatur TT2 ist als Kurve 37 abgebildet. Der zeitliche Verlauf der IGV Position bzw. des Kompressormassenstrom m_{CI} ist als Kurve 38 abgebildet.

Der erste bzw. obere Schwellenwert der Kompressoraustrittstemperatur ist mit der Bezugsziffer 31 gekennzeichnet und der zweite bzw. untere Schwellenwert der Kompressoraustrittstemperatur ist mit der Bezugsziffer 32 gekennzeichnet. Der erste bzw. obere Schwellenwert der Turbinenaustrittstemperatur ist mit der Bezugsziffer 35 gekennzeichnet und der zweite bzw. untere Schwellenwert der Turbinenaustrittstemperatur ist mit der Bezugsziffer 36 gekennzeichnet.

Zum Zeitpunkt t₁ steigt die Kompressoraustrittstemperatur TCII, beispielsweise infolge eines Anstiegs der Temperatur am Kompressoreintritt bzw. Kompressoreinlass. Zum Zeitpunkt t₂ erreicht die Kompressoraustrittstemperatur TCII den oberen Schwellenwert 31 und überschreitet ihn anschließend. Im Rahmen des Regelungsverfahrens wird zum Zeitpunkt t₂ der Brennstoffmassenstrom m_{fuel} reduziert. Dies erfolgt durch eine Steuerung oder Regelung der Kompressoraustrittstemperatur TCII. Infolge der Reduzierung des Brennstoffmassenstroms m_{fuel} sinkt die Turbinenautrittstemperatur TT2. Die Turbinenautrittstemperatur TT2 37 erreicht zum Zeitpunkt t₃ den unteren Schwellenwert 36. Um die Turbinenautrittstemperatur TT2 konstant zu halten, werden die Einlass-Leitschaufeln IGV geschlossen, zum Beispiel mithilfe eines entsprechenden Regelers. Infolge des dadurch reduzierten Massenstroms und Druckverhältnisses wird auch die Kompressoraustrittstemperatur TCII reduziert bzw. verringert und erreicht zum Zeitpunkt t₄ wieder einen Wert im zulässigen Bereich, also zwischen dem oberen und dem unteren Schwellenwert.

## Patentansprüche

1. Verfahren zur Regelung eines Massenstromes in einer Turbine (100), welche eine zum Führen eines Massenstromes ausgelegte Komponente (105), mit einem Austritt (21) umfasst, **dadurch gekennzeichnet, dass**
das Verfahren die folgenden Schritte umfasst:
- Messen der Temperatur eines Massenstromes am Austritt (21) der Komponente (105), und
- Regeln des Massenstromes in der Komponente (105) basierend auf der am Austritt (21) gemessenen Temperatur.

2. Verfahren nach Anspruch 1, **dadurch gekennzeichnet, dass** die Temperatur mittels eines Temperatursensors (19) gemessen wird.

3. Verfahren nach Verfahren nach Anspruch 1 oder 2, **dadurch gekennzeichnet, dass**
der Massenstrom in der Komponente (105) verringert wird, falls die gemessene Temperatur höher ist als ein erster Schwellenwert und/oder
der Massenstrom in der Komponente (105) erhöht wird, falls die gemessene Temperatur geringer ist als ein zweiter Schwellenwert.

4. Verfahren nach einem der Ansprüche 1 bis 3, **dadurch gekennzeichnet, dass**
der erste Schwellenwert und/oder der zweite Schwellenwert festgesetzt werden.

5. Verfahren nach Anspruch 4, **dadurch gekennzeichnet, dass** die Turbine (100) einen Verdichter (105) mit einem Verdichteraustritt (21) umfasst und der erste Schwellenwert und/oder der zweite Schwellenwert in Abhängigkeit von der Temperatur in der Umgebung des Verdichteraustritts festgesetzt werden.

6. Verfahren nach einem der Ansprüche 1 bis 5, **dadurch gekennzeichnet, dass**
die Turbine (100) einen Verdichter (105) mit einem Verdichteraustritt (21) umfasst und die Temperatur des Massenstroms am Verdichteraustritt (Verdichteraustrittstemperatur) gemessen wird.

7. Verfahren nach Anspruch 6, **dadurch gekennzeichnet, dass** der Verdichter (105) eine Anzahl Verdichterleitschaufelreihen umfasst und im Rahmen der Regelung der Massenstrom im Verdichter (105) verändert wird, indem die Position der Leitschaufeln mindestens einer der in Strömungsrichtung (23) ersten Leitschaufelreihen eingestellt wird.

8. Verfahren nach Anspruch 7, **dadurch gekennzeichnet, dass** die Leitschaufelposition schrittweise verändert wird.

9. Verfahren nach einem der Ansprüche 1 bis 6, **dadurch gekennzeichnet, dass**
die Turbine (100) eine Brennkammer (106) und einen Turbinenaustritt (25) umfasst und die Temperatur des Massenstroms am Turbinenaustritt (25) gemessen wird.

10. Verfahren nach Anspruch 9, **dadurch gekennzeichnet, dass** im Rahmen der Regelung der Massenstrom in der Turbine (100) verändert wird, indem der Brennstoffmassenstrom geregelt wird.

11. Vorrichtung zur Regelung eines Massenstromes in einer Turbine (100), welche eine zum Führen des Massenstromes ausgelegte Komponente (105, 112) mit einem Austritt (21) umfasst, **dadurch gekennzeichnet, dass**
die Vorrichtung mindestens eine Einrichtung (19) zum Messen der Temperatur eines die Komponente (105, 112) am Austritt der Komponente (105, 112) verlassenden Massenstroms, und eine Einrichtung zur Regelung des Massenstromes in der Komponente in Abhängigkeit von der am Austritt gemessenen Temperatur umfasst.

12. Gasturbine (100), **dadurch gekennzeichnet, dass** sie eine Vorrichtung nach Anspruch 11 umfasst.

13. Gasturbine (100) nach Anspruch 12, **dadurch gekennzeichnet, dass**
sie einen Verdichter (105) mit einem Verdichteraustritt (21) und eine Turbine (112) mit einem Turbinenaustritt (25) umfasst und die Einrichtung zum Messen der Temperatur des Massenstroms am Verdichteraustritt (21) und/oder am Turbinenaustritt (25) angeordnet ist.

14. Gasturbine (100) nach Anspruch 12 oder Anspruch 13, **dadurch gekennzeichnet, dass**
der Verdichteraustritt (21) und/oder der Turbinenaustritt eine Mittelachse (22) umfassen/umfasst und die Einrichtung zur Messung der Temperatur an der Mittelachse (22) an oder in einer dem Austritt (21) gegenüber liegenden Wand (18) der Gasturbine (100) angeordnet ist.

15. Gasturbine (100) nach einem der Ansprüche 13 bis 15, **dadurch gekennzeichnet, dass**
die Turbine einen Verdichter (105) mit Verdichterleitschaufeln umfasst und die Einrichtung zur Regelung des Massenstromes ausgelegt ist zur Einstellung der Position der Verdichterleitschaufeln in Abhängigkeit von einer gemessenen Verdichteraustrittstemperatur und/oder Turbinenaustrittstemperatur.
